# EUROPEAN PATENT APPLICATION

(11) **EP 2 818 432 A1**
(43) Date of publication of application: **31.12.2014**
(21) Application number: 14173387.3
(22) Date of filing: 23.06.2014
(51) Int. Cl.: B65G 1/04

(54) **System for storing product containers in a storage rack with carriages**

(30) Priority: 28.06.2013 NL 2011058
(71) Applicant: Vanderlande Industries B.V., 5466 RB Veghel (NL)
(72) Inventor: Boonstra, Jan Jeroen, 6605 RT WIJCHEN (NL)
(74) Representative: Algemeen Octrooi- en Merkenbureau B.V.

(57) **Abstract**

The present invention provides a system for storing product containers. The system comprises a layer with rows extending parallel to each other, which rows comprise storage positions for product containers, a guide system comprising longitudinal guides (8b) and transverse guides (9a, 9b) as well as junctions. The guides comprise pairs of parallel guide members (8b, 9a, 9b), each having a running surface (47). The longitudinal running surfaces are located at a first level and the transverse running surfaces (47) are located at a second level, which first and second level are different from each other. The system further comprises carriages that can travel along the guide system. The carriages each comprise a frame (15), longitudinal running wheels (21, 22), transverse running wheels (23), driving means for rotationally driving longitudinal running wheels (21, 22) and transverse running wheels (23), height adjustment means for vertically moving the longitudinal running wheels (21, 22) and the transverse running wheels (23) up and down relative to each other, and exchange means for transferring a product container to a storage position and taking over a product container from a storage position

## Description

The present invention relates to a system for storing product containers, comprising at least one layer with a number of rows extending parallel to each other, each row comprising a number of side-by-side storage positions for product containers, a guide system comprising horizontal longitudinal guides extending in longitudinal direction between adjacent rows and horizontal transverse guides extending in transverse direction, transversely to the longitudinal guides, as well as junctions at positions where at least one longitudinal guide and at least one transverse guide connect, the longitudinal guides comprising pairs of parallel longitudinal guide members, each having a longitudinal running surface, and the transverse guides comprising pairs of parallel transverse guide members, each having a transverse running surface, wherein the longitudinal running surfaces are located at a first level and the transverse running surfaces are located at a second level, the system further comprising carriages that can travel along the guide system, the carriages each comprising a frame, longitudinal running wheels, which roll over the longitudinal running surfaces during movement in the longitudinal direction in use, transverse running wheels oriented transversely to the longitudinal running wheels, which roll over the transverse running surfaces during movement in the transverse direction in use, driving means for rotationally driving at least some of the longitudinal running wheels and at least some of the transverse running wheels, height adjustment means for vertically moving the longitudinal running wheels up and down and the transverse running wheels up and down relative to each other, and exchange means for transferring a product container to a storage position and taking over a product container from a storage position.

Such a system is described in US publication US 5,370,492. In such a system, carriages can move from one longitudinal guide, via a transverse guide, to another longitudinal guide within a layer of rows, so that each carriage can be used efficiently for exchanging product containers with storage positions, irrespective of the row of which a respective storage position forms part. Of necessity there are junctions, either crossings or T-junctions between the longitudinal guides and the transverse guides, where the carriage can make a right-angled change of direction of movement whilst the orientation of the carriage remains unchanged. Each carriage is to that end provided with longitudinal running wheels and with transverse running wheels. The height adjustment means enable the carriage to either have the longitudinal running wheels make contact with the longitudinal guides, in which case the transverse running wheels are clear of the transverse guides, or to have the transverse running wheels make contact with the transverse guides, in which case the longitudinal running wheels are clear of the longitudinal guides. In the system according to US 5,370,492 the longitudinal guides are formed by horizontal U-shaped sections, with the open sides of the U-shape of the respective longitudinal guide members forming a pair facing each other. The longitudinal running surface is formed by the lower horizontal leg of the U-shape. Interruptions are present in the longitudinal running surfaces and in the transverse running surfaces at the location of the junctions. For that reason each carriage is provided with four additional (i.e. eight in total) longitudinal running wheels and four additional (i.e. eight in total) transverse running wheels, so that rolling contact with a longitudinal running surface or a transverse running surface can be guaranteed also at the location of the junctions. Apart from the fact that the carriages will thus be more complex and as a result more expensive, the aforesaid interruptions in the longitudinal running surfaces and the transverse running surfaces has the drawback that the passing of a junction by a carriage, in spite of the use of eight running wheels for the direction in question, will be slightly bumpy at all times. As a result, vibrations develop in the carriage, thus increasing the risk of a product container falling off the carriage. Furthermore, the vibrations lead to undesirable noise and an additional mechanical load and thus wear on the carriages. Within the framework of the continuous aim to realise a more efficient use of a system as described in the introduction, a continuous effort is being made to enable carriages to travel faster without this increasing the aforesaid problems.

The object of the present invention is to solve or at least alleviate the aforesaid problems. In order to achieve that object, the first level of the longitudinal running surfaces is different from the second level of the transverse running surfaces. This implies that one of the longitudinal running surfaces and the transverse running surfaces is located at a lower level than the other of the longitudinal running surfaces and the transverse running surfaces. The invention obviates the need to interrupt the running surfaces of the lower level of the first level and the second level at the location of junctions. This has the advantage that upon movement of a carriage in the direction in question no bumps will occur when the carriage passes a junction, important advantages of which include the reduced mechanical load and wear on the carriage and less noise, but in addition the fact that the carriage need not be fitted with additional running wheels for the direction in question.

Preferably, the higher ones of the longitudinal running surfaces and the transverse running surfaces are interrupted at the location of junctions and the lower ones of the longitudinal running surfaces and the transverse running surfaces are uninterrupted at the location of junctions.

If the first level is higher than the second level, this has the advantage that the transverse running surfaces are quite suitable for being configured as interrupted running surfaces. Since the transverse guides as a rule comprise more junctions than the longitudinal guides in systems according to the present invention, the advantages of the present invention will be manifest in particular in that case.

Advantageously, the diameter of the transverse running wheels is larger than the diameter of the longitudinal running wheels.

In order to be able to pass an interruption in the longitudinal running surfaces with the smallest possible bump, it may be advantageous if each carriage comprises an additional longitudinal running wheel for each longitudinal running wheel, which additional longitudinal running wheel follows the same track as the associated longitudinal running wheel and which rolls over the longitudinal running surfaces in use, in any case when the associated longitudinal running wheel passes an interruption in the longitudinal running surface.

The diameter of the additional longitudinal running wheel is preferably smaller than the diameter of the associated longitudinal running wheel.

A constructionally advantageous embodiment is obtained if the longitudinal running wheels are rotatably connected to the frame at a fixed position, whilst the transverse running wheels are rotatably connected to at least one subframe which can be moved up and down relative to the frame by means of the height adjustment means.

In order to ensure that carriages will move in the correct direction and not roll of sideways from running surfaces, for example, the longitudinal guide members each comprise at least one longitudinal guide surface and the transverse guide members each comprise at least one transverse guide surface, wherein each carriage comprises at least one guide wheel which is in guiding cooperation with the at least one longitudinal guide surface during movement of the carriage in the longitudinal direction and/or which is in guiding cooperation with the at least one transverse guide surface during movement of the carriage in the transverse direction.

If the at least one longitudinal guide surface and/or the at least one transverse guide surface extend(s) between the first level and the second level, the longitudinal guide members and/or the transverse guide members can be of compact construction with a low overall height.

A carriage only needs to be provided with a limited number of guide wheels if all the guide wheels of each carriage are provided only at corners of the carriage and are capable of guiding cooperation both with the longitudinal guide surfaces and with the transverse guide surfaces.

According to an advantageous embodiment, each carriage is provided with no more and no less than three guide wheels.

The invention can be used advantageously in particular in a system which comprises a number of layers, in which the storage positions form part of racks which are each provided with storage positions disposed beside and above each other.

The carriage can be of relatively simple construction if the driving means are designed to drive the drivable longitudinal running wheels and the drivable transverse running wheels simultaneously. This implies that running wheels, insofar as they are driven running wheels which are not in rolling contact with an underlying running surface, will nevertheless rotate upon movement of the carriage in use.

An advantageous embodiment is in that case obtained if the driving means comprise a single electric motor for driving both the drivable longitudinal running wheels and the drivable transverse running wheels. In that case a switchable transmission between the electric motor on the one hand and the longitudinal running wheels and the transverse running wheels on the other hand is not needed, therefore.

A further simplified embodiment of the carriage can be obtained if the driving means comprise a single electric motor which is designed both for driving the drivable longitudinal running wheels and/or the drivable transverse running wheels and for driving the height adjustment means and/or if the driving means comprise a single electric motor that is designed both for driving the drivable longitudinal running wheels and/or the drivable transverse running wheels and for driving the exchange means.

The invention also relates to a combination of a guide system and at least one carriage for use in a system according to the invention as described in the foregoing.

The invention will now be explained in more detail by means of a description of a non-limitative possible embodiment of a system according to the invention, in which reference is made to the following figures:
Figure 1 is an isometric top plan view of a part of a system according to the invention;
Figure 2 is an isometric top plan view of a carriage that forms part of a system according to figure 1;
Figure 3 is an isometric bottom view of the carriage according to figure 2;
Figure 4 is a schematic, isometric view of a carriage at a junction, which carriage is set to move in the longitudinal direction; and
Figure 5 is a schematic, isometric view of the carriage at the junction according to figure 4, in this case, however, set to move in the transverse direction.

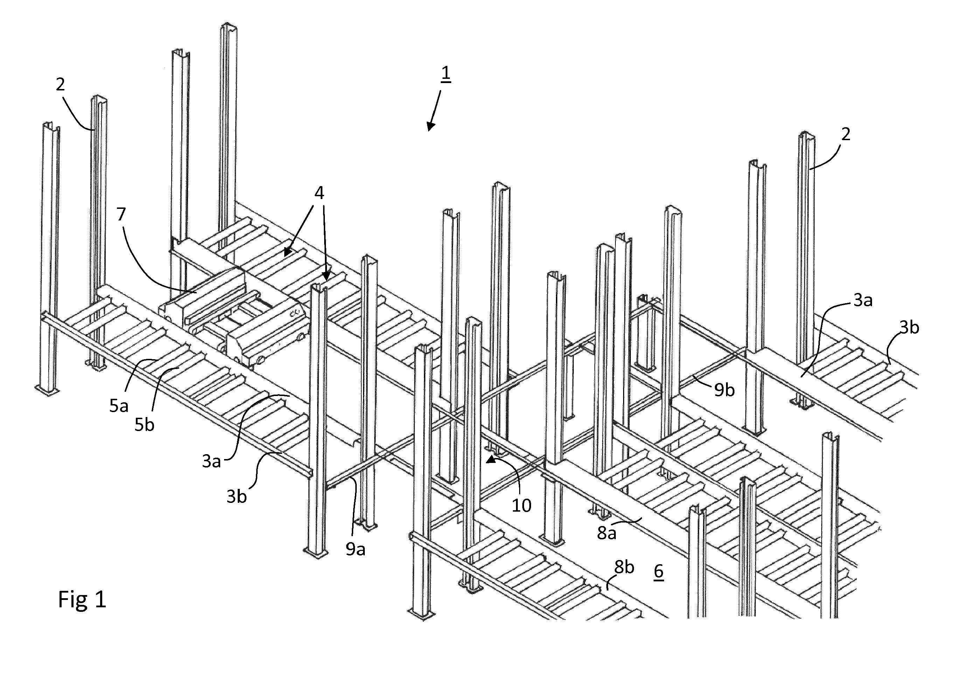

The storage system 1 according to figure 1 comprises a system of racks with uprights 2 and longitudinal girders 3a, 3b. The racks comprise storage positions 4 provided in parallel rows. Each storage position comprises two support elements 5a, 5b, which are mounted between two longitudinal girders 3a, 3b, which are in turn mounted between two uprights 2. The support elements 5a, 5b are designed to support a product container, for example a product bin, in which identical products are stored.

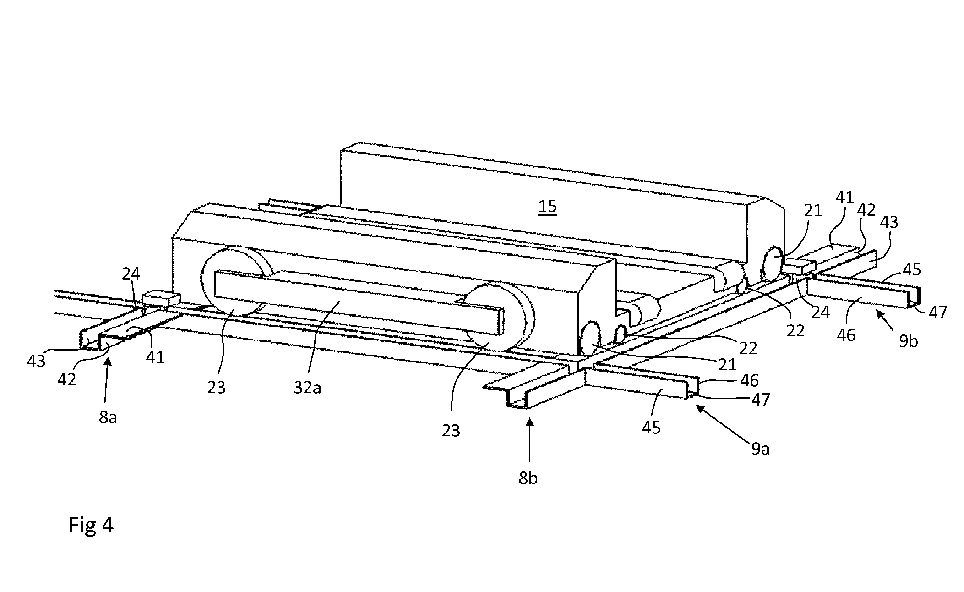

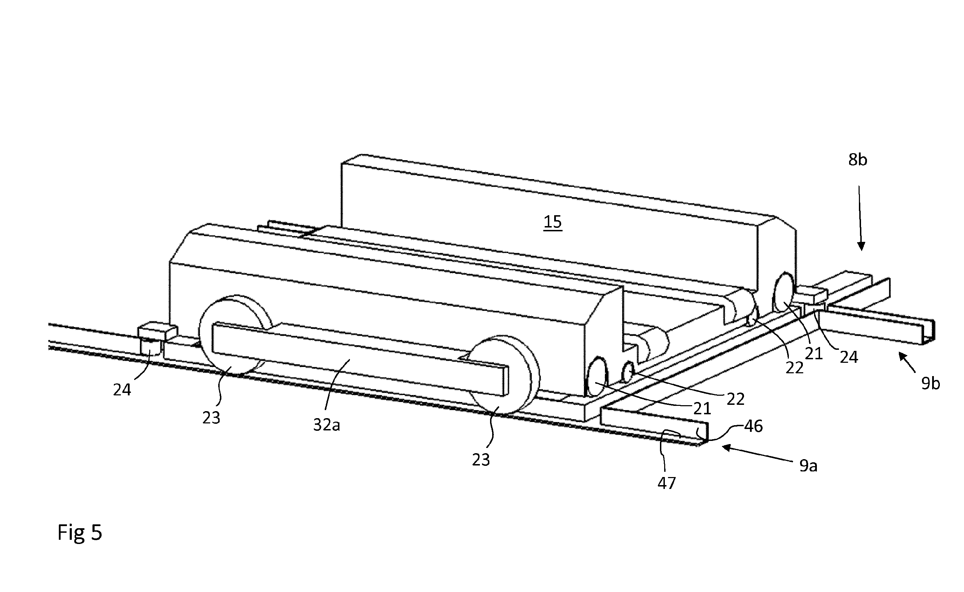

For the sake of clarity only a part of the storage system 1 is shown in figure 1. Thus, the storage system in fact comprises a number of superposed layers, each comprising rows of storage positions 4, only a limited number of which rows are shown. The rows of storage positions 4 are provided in pairs, with a longitudinal aisle 6 extending between the rows of a pair, in which aisle a carriage 7 (yet to be discussed) is movable. To that end, longitudinal guides comprising longitudinal guide members 8a and 8b are provided between the two rows of a pair, which longitudinal guide members are integrated in the longitudinal girders 3a. The longitudinal guide members 8a and 8b will yet be discussed in more detail with reference to figures 4 and 5.

At each layer, transverse guides comprising pairs of transverse guide members 9a, 9b extend transversely to the longitudinal guide members 8a, 8b, which transverse guide members connect at the location of junctions, such as the crossing 10. The rows of the storage positions 4 are interrupted at the location of the transverse guide members 9a, 9b. The transverse guide members 9a, 9b are mounted to the uprights 2.

The carriage 7 can move along the longitudinal guides 8a, 8b and the transverse guides 9a, 9b. The system 1 comprises a number of such carriages 7 the carriages 7 can be transported between the various layers by means of lifts (not shown). Such lists are preferably positioned at the end of the longitudinal guides or the transverse guides.

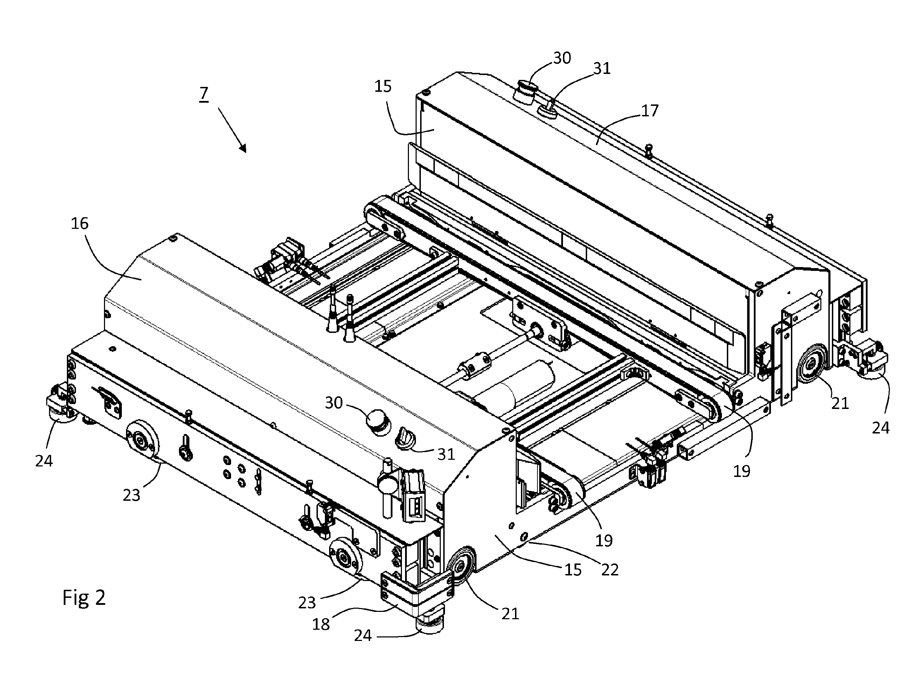

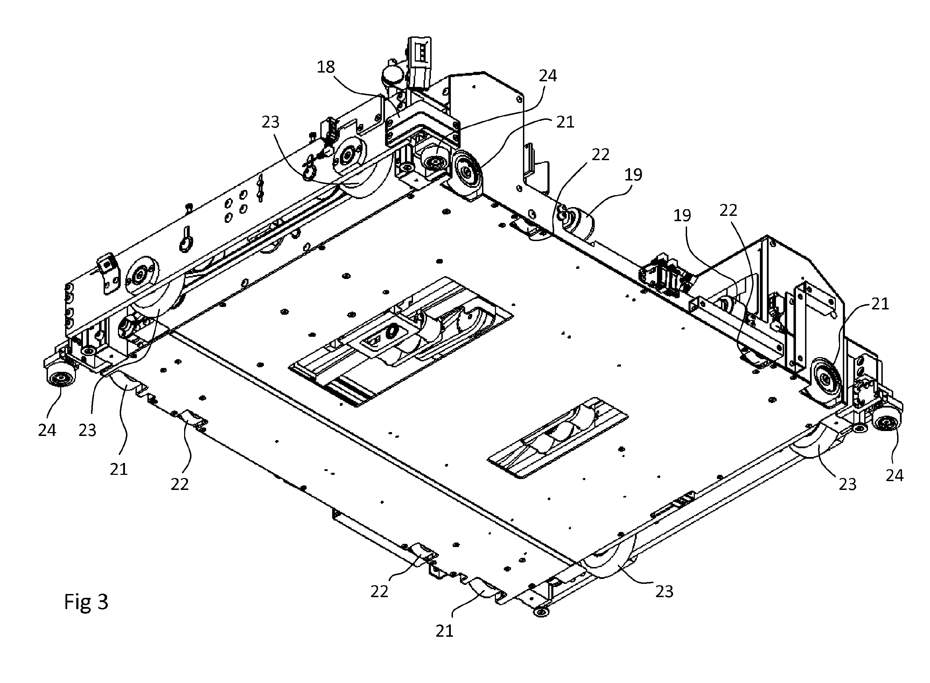

Figures 2 and 3 show a carriage 7. The carriages 7 have a base frame 15 and, inter alia, exchange means. The exchange means comprise two parallel arms with drivable, endless conveyor belts 19. The arms can move forward and backward in transverse direction relative to the frame, more specifically from an aisle 6 in the direction of a storage position 4 and vice versa. During the forward movement, the arms also make an upward movement, so that a product container present in a storage position can be picked up.

The carriage 7 has four driven longitudinal running wheels 21 and four non-driven longitudinal running wheels 22 for movement in the longitudinal direction and four driven transverse running wheels 23 oriented transversely to the longitudinal running wheels 21, 22 (see also figures 4 and 5) for movement in the transverse direction. The driven longitudinal running wheels 21 have a larger diameter than the non-driven longitudinal running wheels 22. The diameter of the transverse running wheels 23 is in turn larger than that of the driven longitudinal running wheels 21. In use, the driven wheels 21 and 23 are all driven simultaneously by one electric motor with which the carriage 7 is provided. The axes of rotation of the running wheels 21-23 have a horizontal orientation. The carriage 7 further comprises three non-driven guide wheels 24 on three of the four corner points of the carriage 7 (seen in top plan view). The guide wheels 24 have vertical axes of rotation.

Just like the three guide wheels 24, the longitudinal running wheels 21 and 22 are fixedly and rotatably supported in the base frame 15 of the carriage 7. The transverse running wheels 23 are rotatably supported relative to one of two subframes 32a and 32b provided on opposite sides of the carriage 7. Only the subframe 32a is shown in the figures. The subframes 32a, 32b can be moved rectilinearly up and down relative to the base frame 15 by means of slide guides. The subframes 32a, 32b are capable of rectilinear vertical reciprocating movement relative to the base frame 15 via slide guides. To that end the carriage 7 is provided with two electric motors under guards 16, 17. The range of the movement is such that the bottom side of the transverse running wheels 23 is positioned lower than the bottom side of the longitudinal running wheels 21, 22 in a lower position of the subframes 32a, 32b and higher than the bottom side of the longitudinal running wheels 21, 22 in an upper position.

Referring to figures 4 and 5, which relate to the surroundings of the crossing 10, the longitudinal guide members 8a, 8b have a U-shaped cross-section, with the open side of the U-shape facing upward and with two upright legs 42, 43 at the upper end of the upright leg 42 of the U-shape of the longitudinal guide member 8a, 8b that is located on the side of the associated longitudinal guide member 8b, 8a, the U-shape is extended with a horizontal surface that functions as a longitudinal running surface 41 for the longitudinal running wheels 21, 22 during movement of the carriage 7 in the longitudinal direction. The upright legs 42, 43 function as longitudinal guide surfaces for the guide wheels 24 in that case.

The transverse guide members 9a, 9b have the same U-shaped cross-section as the longitudinal guide members 8a, 8b, but their U-shape is not extended with a horizontal surface such as the longitudinal running surface 41. The U-shape of the transverse guides extends at the same vertical level as the U-shape of the longitudinal guides and has two upright legs 45, 46 which are connected by a horizontal web surface 47. The web surface 47 functions as a transverse running surface for the transverse running wheels 23, whilst the upright legs function as transverse guide surfaces for the guide wheels 24. The transverse running surfaces 47 are located lower than the longitudinal running surfaces 41. The difference corresponds to the height of the guide surfaces 42, 43, 45, 46. Said height is at least 10 mm, for example 18 mm. As shown in figures 4 and 5, the transverse running surfaces 47 are uninterrupted at the location of the crossing 10, whereas the longitudinal running surfaces 41, on the other hand, are interrupted at the location where a longitudinal guide member 8a, 8b and a transverse guide member 9a, 9b intersect.

The spacing between each of the non-driven longitudinal running wheels 22 and an associated (nearest) driven longitudinal running wheel 21 is selected to be sufficiently large, viz. slightly larger than the above interruption in the longitudinal running surfaces 41, to be able to ensure that in any case one of the respective driven longitudinal running wheel 21 and the non-driven longitudinal running wheel 22 makes rolling contact with the respective longitudinal running surface 41. Little space is available at the location of the non-driven longitudinal running wheels 22 and a smaller diameter (about 40 mm) has been selected for those longitudinal running wheels 22 than for the longitudinal running wheels 21 (about 60 mm).

The longitudinal running wheels 22 are mounted in the frame in such a manner that in theory they will not make contact with the longitudinal running surface 41 in a situation of rolling contact between the longitudinal running wheels 21 and the longitudinal running surface 41. Concretely, this implies that the bottom sides of the longitudinal running wheels 22 are positioned a few tenths of millimetres higher than the bottom sides of the longitudinal running wheels 21. This prevents a situation in which part of the weight of the carriage 7 is supported by the non-driven longitudinal running wheels 22 in normal use, which would lead to less grip for the driven longitudinal running wheels 21 that are to move the carriage 7 ahead in the longitudinal direction. The consequence might be that the desired accelerations and speeds cannot be realised or even that the longitudinal running wheels 21 will skid and the carriage will not move from its spot.

The carriages 7 are furthermore each provided with a carriage control unit and an energy supply unit. The energy supply unit preferably consists of batteries or so-called supercaps. The energy supply unit is recharged at specific locations in the system through contactless energy transfer and/or via the contact fingers 18. The carriage control unit is capable of receiving and transmitting signals wirelessly to exchange information with a central control unit of the system 1. The control unit and the energy supply unit are covered by guards 16 and 17. On the guards 16 and 17, the carriage is provided with emergency stop buttons 30 and operating switches 31. In case of emergency, an operator can turn off the carriage by means of the emergency stop buttons 30. The operating switches 31 can be used for starting or restarting the carriage.

The manner in which a change of transport direction at the crossing 10 takes place will now be described with reference to figures 4 and 5. Figures 4 and 5 show the same position for a carriage 7 and, but in figure 5 parts of the guides are not shown in order to illustrate the situation of the transverse running wheels 23 of the carriage 7 more clearly. Figure 5 shows a carriage 7 which is ready for transport in the transverse direction over the transverse guide members 9a, 9b. The subframes 32a, 32b, and thus the transverse running wheels 23, are in the lower position and make contact with the transverse running surfaces 47. The longitudinal running wheels 21, 22 have been lifted a few mm, for example 3 mm, above the longitudinal running surfaces 41. The carriage 7 can thus move in the transverse direction without said longitudinal running wheels 21, 22 making contact with a longitudinal guide or a transverse guide.

If the carriage 7 must change direction at the junction 10, the carriage 7 is first stopped precisely in the middle of said crossing. This is done by the carriage control unit and methods for doing so are known. At said position in the middle of the crossing 10, the guide wheels 24 are positioned precisely at the intersection between the longitudinal guide members 8a, 8b and the transverse guide members 9a, 9b, and are thus clear of the vertical guide surfaces 42, 43 and 46, 47. The subframes 32a, 32b are now shifted from the lower position to the upper position. During the first part of said movement, the consequence will be that the transverse running wheels 23 will remain supported on the transverse running surfaces 47 and that the frame 15 of the carriage 7 and all the parts fixedly connected thereto will drop until the longitudinal running wheels 21 make contact with the longitudinal running surfaces 41. From that moment the transverse running wheels 23 are lifted and come clear of the transverse running surfaces 47. This movement is continued until the transverse running wheels 23 have reached a height such that the bottom sides of the transverse running wheels are positioned higher than the longitudinal running surfaces 41. In that position the transverse running wheels 23 will not touch the longitudinal guide members 8a, 8b or the transverse guide members 9a are, 9b when the carriage 7 starts moving in the longitudinal direction. During the above-described upward movement, the guide wheels 24 and the frame 15 have been moved downward a few mm. The guide wheels 24 will thus be in guiding contact with the vertical guide surfaces 42, 43 of the longitudinal guide members 8a, 8b at a slightly lower level than the level at which the guide wheels are in guiding contact with the vertical guide surfaces 45, 46 of the transverse guide members 9a, 9b.

When the subframes 32a, 32b have thus reached their upper position, the carriage 7 can drive off in the longitudinal direction. The longitudinal running wheels 21 will bridge the interruptions in the longitudinal running surfaces 41 via the longitudinal running wheels 22. To reduce the mechanical consequences thereof, it is conceivable for the carriage 7 to do so while the carriage 7 has a relatively low speed, for example of 1 m/s at most. The carriage will not reach its normal full speed of for example 2 m/sec until it is well past the interruptions.

In the latter situation, the carriage 7 will decelerate to a relatively low speed for bridging the interruptions upon approaching a junction over the longitudinal guide members 8a, 8b. Since the junctions will normally be located mainly at the ends of the longitudinal guides, the reduction will not impede with the operation of the system, since decelerating would be necessary anyway in order to be able to effect a right-angled change of direction. It is also conceivable, however, that one or more transverse guides are provided inside the system as shown also in figure 1, especially if the longitudinal guides are relatively long. Due to the proportion between the length of the longitudinal guides, insofar as they extend between crossings, and the number of crossings, the carriage will still be able to move primarily at normal speed at all times.

As already said before, the transverse running surfaces 47 are uninterrupted. The number of junctions per unit of length in transverse direction is significantly larger than the number of junctions per unit of length in the longitudinal direction. Because of the uninterrupted nature of the transverse running surfaces 47, it is not necessary to decelerate at junctions and the carriage 7 can pass the junctions at maximum speed, therefore.

## Claims

1. A system for storing product containers, comprising at least one layer with a number of rows extending parallel to each other, each row comprising a number of side-by-side storage positions for product containers, a guide system comprising horizontal longitudinal guides extending in longitudinal direction between adjacent rows and horizontal transverse guides extending in transverse direction, transversely to the longitudinal guides, as well as junctions at positions where at least one longitudinal guide and at least one transverse guide connect, the longitudinal guides comprising pairs of parallel longitudinal guide members, each having a longitudinal running surface, and the transverse guides comprising pairs of parallel transverse guide members, each having a transverse running surface, wherein the longitudinal running surfaces are located at a first level and the transverse running surfaces are located at a second level, the system further comprising carriages that can travel along the guide system, the carriages each comprising a frame, longitudinal running wheels, which roll over the longitudinal running surfaces during movement in the longitudinal direction in use, transverse running wheels oriented transversely to the longitudinal running wheels, which roll over the transverse running surfaces during movement in the transverse direction in use, driving means for rotationally driving at least some of the longitudinal running wheels and at least some of the transverse running wheels, height adjustment means for vertically moving the longitudinal running wheels and the transverse running wheels up and down relative to each other, and exchange means for transferring a product container to a storage position and taking over a product container from a storage position, **characterised in that** the first level is different from the second level.

2. A system according to claim 1, **characterised in that** the higher ones of the longitudinal running surfaces and the transverse running surfaces are interrupted at the location of junctions and the lower ones of the longitudinal running surfaces and the transverse running surfaces are uninterrupted at the location of junctions.

3. A system according to claim 1 or 2, **characterised in that** the first level is higher than the second level.

4. A system according to claim 3, **characterised in that** the diameter of the transverse running wheels is larger than the diameter of the longitudinal running wheels.

5. A system according to claim 2, 3 or 4, **characterised in that** each carriage comprises an additional longitudinal running wheel for each longitudinal running wheel, which additional longitudinal running wheel follows the same track as the associated longitudinal running wheel and which rolls over the longitudinal running surfaces in use, in any case when the associated longitudinal running wheel passes an interruption in the longitudinal running surface.

6. A system according to claim 5, **characterised in that** the diameter of the additional longitudinal running wheel is smaller than the diameter of the associated longitudinal running wheel.

7. A system according to any one of the preceding claims, **characterised in that** the longitudinal running wheels are rotatably connected to the frame at a fixed position, whilst the transverse running wheels are rotatably connected to at least one subframe which can be moved up and down relative to the frame by means of the height adjustment means.

8. A system according to any one of the preceding claims, **characterised in that** the longitudinal guide members each comprise at least one longitudinal guide surface and the transverse guide members each comprise at least one transverse guide surface, wherein each carriage comprises at least one guide wheel which is in guiding cooperation with the at least one longitudinal guide surface during movement of the carriage in the longitudinal direction and/or which is in guiding cooperation with the at least one transverse guide surface during movement of the carriage in the transverse direction.

9. A system according to claim 8, **characterised in that** the at least one longitudinal guide surface and/or the at least one transverse guide surface extend(s) between the first level and the second level.

10. A system according to claim 8 or 9, **characterised in that** all the guide wheels of each carriage are provided only at corners of the carriage and are capable of guiding cooperation both with the longitudinal guide surfaces and with the transverse guide surfaces.

11. A system according to claim 8, 9 or 10, **characterised in that** each carriage is provided with no more and no less than three guide wheels.

12. A system according to any one of the preceding claims, **characterised in that** the system comprises a number of layers, wherein the storage positions form part of racks which are each provided with storage positions disposed beside and above each other.

13. A system according to any one of the preceding claims, **characterised in that** the driving means are designed to drive the drivable longitudinal running wheels and the drivable transverse running wheels simultaneously.

14. A system according to any one of the preceding claims, **characterised in that** the driving means comprise a single electric motor for driving both the drivable longitudinal running wheels and the drivable transverse running wheels.

15. A combination of a guide system and at least one carriage for use in a system according to any one of the preceding claims.
